Europäisches Patentamt

European Patent Office

Office européen des brevets

(11) Publication number : **0 473 413 A2**

## EUROPEAN PATENT APPLICATION

(21) Application number : **91307881.2**

(22) Date of filing : **28.08.91**

(51) Int. Cl.⁵ : **G11B 11/10**

(30) Priority : **31.08.90 JP 231173/90**

(43) Date of publication of application :
**04.03.92 Bulletin 92/10**

(84) Designated Contracting States :
**DE FR GB IT NL**

(71) Applicant : **CANON KABUSHIKI KAISHA**
**30-2, 3-chome, Shimomaruko, Ohta-ku**
**Tokyo (JP)**

(72) Inventor : **Hagiwara, Hiroyuki**
**c/o Canon K.K., 30-2, 3-chome, Shimomaruko**
**Ohta-ku, Tokyo (JP)**

(74) Representative : **Beresford, Keith Denis Lewis**
**et al**
**BERESFORD & Co. 2-5 Warwick Court High**
**Holborn**
**London WC1R 5DJ (GB)**

(54) **Magnetooptical recording apparatus.**

(57)   The disclosure relates to a magnetooptical recording apparatus. The apparatus has an optical head for applying a light beam to a magnetooptical recording medium, a magnetic head for applying a magnetic field to the medium, a carriage for supporting the magnetic head and a fixed member provided on a main body of the apparatus. A rotation member is provided on the carriage and is adapted to be come into contact with the fixed member so as to move the magnetic head in a direction in which the magnetic head is away from the surface of the medium. By such the construction, it is not necessary to provide a driving source for lifting up or down the magnetic head suspension system, the weight is reduced, and the moving speed is high.

EP 0 473 413 A2

# FIG. 2

## BACKGROUND OF THE INVENTION

### Field of the Invention

The invention relates to a magnetooptical recording apparatus using a floating magnetic head.

### Related Background Art

In a magnetooptical recording apparatus for executing at least either one of the recording, reproduction, and erasure of information onto/from a magnetooptical recording medium, a magnetic field modulation recording system is promising from a viewpoint of the recording of a high density and a high speed.

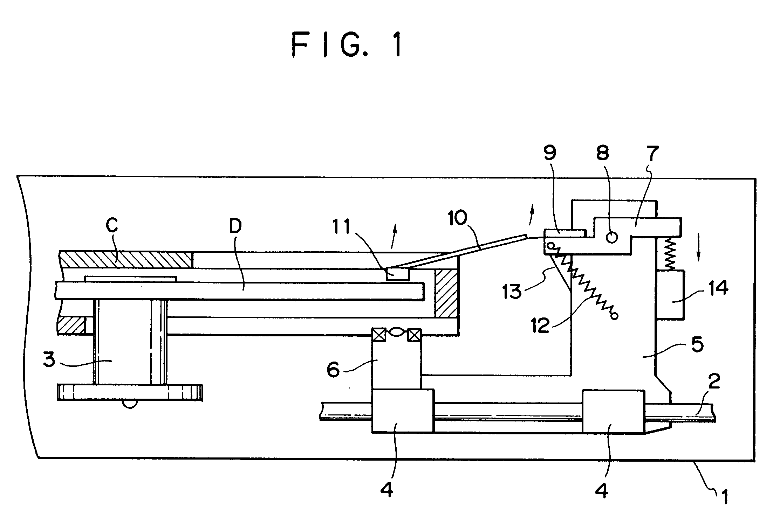

Fig. 1 shows a fundamental construction of a magnetooptical disc apparatus of the high-speed magnetic field modulation overwriting type using an air floating type magnetic head. The direction of the magnetic field which is generated from the magnetic head is inverted in correspondence to data to be recorded, while continuously irradiating a laser beam from an optical head. An area in which the magnetization is inverted in accordance with the magnetic field is only the portion whose temperature increased by the irradiation of a light spot. Therefore, a recording density is determined by a diameter of light spot. To record at a high speed, a coil of a small inductance is mounted onto an air floating slider and is allowed to approach a recording film.

Fig. 1 is a cross sectional view showing a loading/ejecting mechanism of a head supporting system of a conventional magnetooptical disc apparatus. A shaft 2 is arranged in the horizontal direction near an inner bottom surface of a casing 1 of the magnetooptical disc apparatus. A spindle motor 3 is arranged on an extending line at one end of the shaft 2 in a manner such that a rotational shaft is directed in the vertical direction. The shaft 2 supports a carriage 5 through a bearing 4. An optical head 6 is attached upward to an edge portion of the carriage 5 on the side of the spindle motor 3. A column portion is formed in the edge portion of the carriage 5 on the opposite side. A rotational member 7 is supported to the upper portion of the column portion by a shaft 8 so as to be rotatable in a vertical plane which is parallel with the shaft 2. One end of a suspension arm 10 is attached through a member 9 to an edge portion of the rotational member 7 on the side of the spindle motor 3. A floating magnetic head 11 is attached to the other end of the suspension arm 10. An edge portion of the rotational member 7 on the side of the suspension arm 10 is coupled with the carriage 5 and is urged downwardly by a spring 12 and a further rotation is restricted by a stopper 13 provided for the carriage 5. A solenoid 14 is provided on the opposite side of the suspension arm 10 with respect to the shaft 8 of the rotational member 7. The rotational member 7 is rotated by the driving of the solenoid 14 in the direction indicated by an arrow, so that the suspension arm 10 is lifted up. The spindle motor 3 rotates a magnetooptical disc D as a magnetooptical recording medium received in a portable cartridge C in a horizontal plane. The floating magnetic head 11 approaches the upper surface of the magnetooptical disc D and floats up.

When information is recorded onto the magnetooptic disc D, a laser beam is continuously irradiated onto the disc D from the optical head 6 and, at the same time, a magnetic field corresponding to data to be recorded is applied from the floating magnetic head 11 to the portion to which the laser beam of the disc D is irradiated.

When a cartridge C is loaded to or is ejected from a loading position (position shown in Fig. 1), the carriage 5 is evacuated and the floating magnetic head 11 is lifted upward by the driving of the solenoid 14.

In the above conventional apparatus, however, since a heavy part such as a solenoid 14 is mounted onto the carriage 5 to move the optical head 6 and the floating magnetic head 11, a whole weight of the movable portion increases and the movement of the carriage 5 is made slow, so that there is a problem such that a magnetooptical recording apparatus has a long waiting time.

## SUMMARY OF THE INVENTION

It is an object of the invention to solve the above drawbacks and to provide a magnetooptical recording apparatus which can realize a high moving speed of a carriage on which a floating magnetic head is mounted.

To accomplish the above object, according to the invention, in a magnetooptical recording apparatus for executing at least either one of the recording, reproduction, and erasure onto/from a magnetooptical recording medium by using a magnetic head, when the magnetooptical recording medium is loaded or ejected into/from the magnetooptical recording apparatus, the carriage which supports the magnetic head is evacuated and a rotational member provided for the carriage is come into engagement with a fixed member provided for the apparatus main body, thereby moving the magnetic head in the direction such as to be away from the recording medium surface.

In the magnetooptical recording apparatus having the above structure, the movement in the evacuation direction of the carriage is converted into the rotating action by the rotational member having a cam or the like and the magnetic head is moved in such a direction as to be away from the recording medium surface.

## BRIEF DESCRIPTION OF THE DRAWINGS

Fig. 1 is a cross sectional view of a conventional magnetooptical disc apparatus;

Figs. 2 and 3 are cross sectional views of the first embodiment of a magnetooptical recording apparatus of the invention; and

Fig. 4 is a cross sectional view of the second embodiment of a magnetooptical recording apparatus of the invention.

## DETAILED DESCRIPTION OF THE PREFERRED EMBODIMENTS

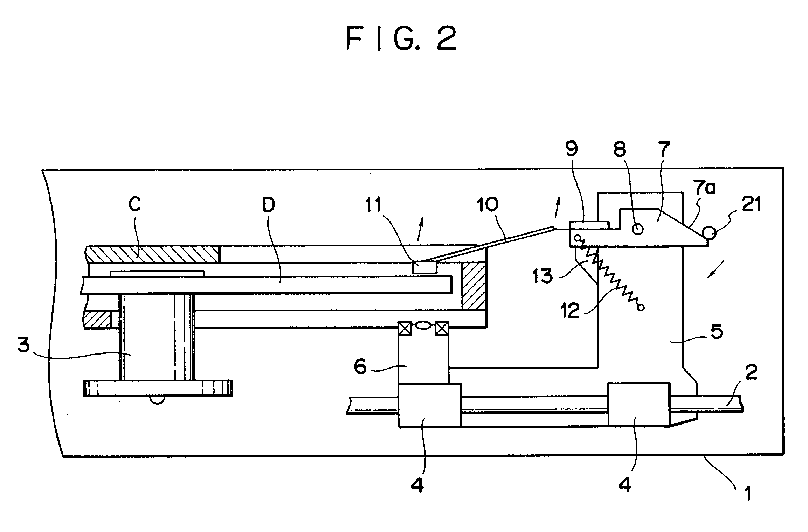

The invention will now be described in detail with reference to embodiments shown in Figs. 2 to 4.

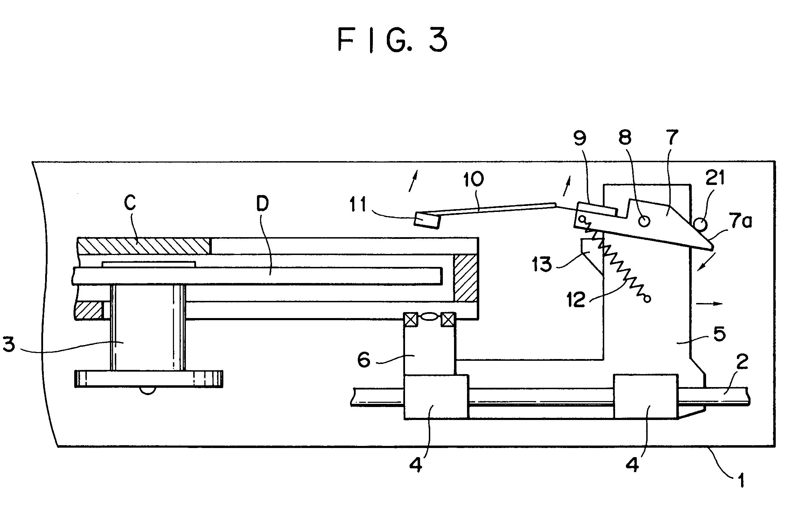

Figs. 2 and 3 show cross sectional views of an embodiment of a magnetooptical recording apparatus of the invention. The apparatus of the embodiment differs from the conventional apparatus shown in Fig. 1 with respect to mainly the rotational member 7 in the upper portion of the carriage 5. Since the other portions are similar to those in the conventional apparatus, their descriptions are omitted. That is, an edge portion on the opposite side of the suspension arm 10 with respect to the shaft 8 of the rotational member 7 is formed as a triangular cam 7a and is come into contact with a fixed pin 21 arranged to the casing 1 of the apparatus main body. At this time, the floating magnetic head 11 is positioned near the inside of the outermost rim of the magnetooptical disc D as shown in Fig. 2.

When the portable cartridge C enclosing the magnetooptical disc D therein is loaded to or is ejected from the loading position (position shown in Fig. 2) to record, reproduce, or erase information onto/from the disc D, the carriage 5 is evacuated. When the carriage 5 is moved to the right shown in Fig. 3, the rotational member 7 rotates clockwise by the cam 7a which is in contact with the fixed pin. The suspension arm 10 coupled to the rotational member 7 and the floating magnetic head 11 are moved upward.

As mentioned above, the carriage 5 is moved backward and the backward movement is converted by the rotational member 7 into the movement in such a direction as to allow the floating magnetic head 11 to be away from the medium surface of the disc D. The floating magnetic head 11 is moved upward so as not to interfere the cartridge C. After that, the cartridge C is ejected out or loaded.

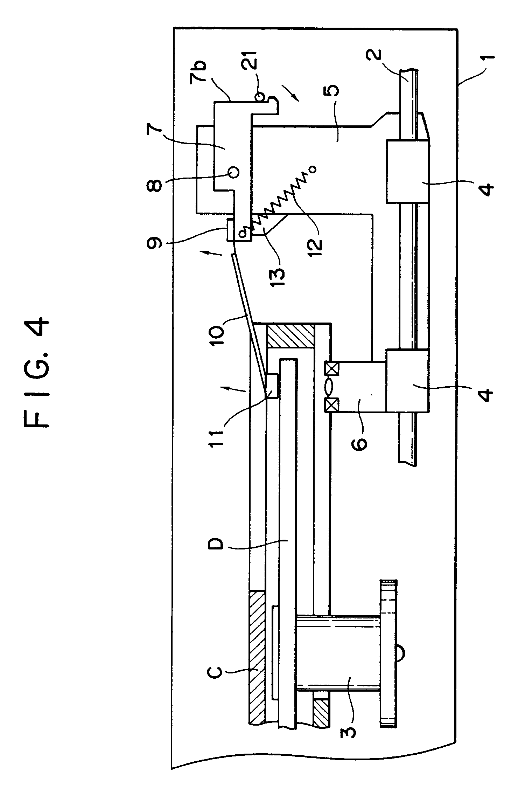

Fig. 4 shows a cross sectional view of the second embodiment of a magnetooptical recording apparatus of the invention. In a manner similar to Figs. 2 and 3, the floating magnetic head 11 is supported to one end of the rotational member 7 through the suspension arm 10. The other edge of the rotational member 7 is bent downward to thereby form an L-shaped cam 7b and is come into contact with the fixed pin 21 arranged to the casing 1. At this time, the floating magnetic head 11 is positioned near the inside of the outermost rim of the magnetooptical disc D.

When the carriage 5 is moved, the lower edge of the rotational member 7 is pushed to the fixed pin 21 and the rotational member 7 rotates clockwise, so that the suspension arm 10 coupled to the rotational member 7 and the floating magnetic head 11 are moved upward.

In both of the above embodiments, when the carriage 5 is moved backward, the floating magnetic head 11 is pushed upward by the driving force in the seeking direction of the carriage 5, thereby preventing the head 11 from interfering the cartridge C. Therefore, the carriage 5 doesn't need a driving source to move the floating magnetic head 11, the weight is reduced, and the moving speed is high.

As described above, the magnetooptical recording apparatus according to the invention doesn't need a driving source to lift up or down the floating magnetic head suspension system and vertically moves the floating magnetic head suspension system by using the action in the disc radial direction of the carriage. Therefore, an increase in weight of the carriage due to the heavy part such as a solenoid or the like doesn't occur and the waiting time is reduced due to the use of the light carriage.

## Claims

1.  A magnetooptical recording apparatus comprising:

    an optical head for irradiating a light beam to a magnetooptical recording medium;

    a magnetic head for applying a magnetic field to said magnetooptical recording medium;

    a carriage for supporting said magnetic head;

    a fixed member provided for an apparatus main body; and

    a rotational member which is provided for the carriage and is come into engagement with the fixed member, thereby moving the magnetic head in such a direction as to be away from a medium surface of said magnetooptical recording medium.

2.  An apparatus according to claim 1, wherein a cam is formed in a portion of the rotational member which is come into contact with the fixed member.

3.  An apparatus according to claim 1, wherein when the magnetooptical recording medium is loaded into or is ejected out from the apparatus main body, the magnetic head is moved by the rotational member in such a direction as to be away from the medium surface of said magnetooptical medium.

4. A magnetooptical recording apparatus comprising:

an optical head for irradiating a light beam to a magnetooptical recording medium;

a magnetic head for applying a magnetic field to said magnetooptical recording medium;

a carriage for supporting said magnetic head;

a member provided for an apparatus main body; and

moving means which is provided for the carriage and is come into engagement with said member, thereby moving the magnetic head in such a direction as to be away from a medium surface of said magnetooptical recording medium.

5. A magnetooptical recording apparatus comprising:

an optical head for irradiating a light beam to a magnetooptical recording medium;

a magnetic head for applying a magnetic field to said magnetooptical recording medium;

a carriage for supporting said magnetic head; and

means for converting a movement of the carriage in an evacuation direction into a movement in such a direction as to allow the magnetic head to be away from a medium surface of the magnetooptical recording medium.

6. A method of moving a magnetic head in a magnetooptical recording apparatus comprising the steps of:

moving backward a carriage for supporting the magnetic head to apply a magnetic field to a magnetooptical recording medium; and

converting a movement of the carriage in a backward direction into a movement in such a direction as to allow the magnetic head to be away from a medium surface of said magnetooptical recording medium.

7. Information recording/reproducing/erasing apparatus including an information transducing head and a mechanism for moving the head away from an information medium on removal of the medium, characterised in that the mechanism is a mechanical actuator driven by a movement of the head supporting carriage.

8. A transducer head mechanism for a recording medium comprising a carriage mounted for movement towards a medium in a first (longitudinal) direction and a head mounted thereon movable towards/away from the medium in a second, different, direction, characterised in that movement of the carriage away from the medium in the first direction causes movement of the head away from the medium in the second direction.

9. A magnetooptical recording device comprising a floating head and an ejection mechanism, characterised in that on operation of the ejection mechanism, a mechanical actuator moves the floating head mechanically away from the medium.

10. A recording head mechanism comprising a linear actuator for moving a recording head linearly away from the medium and a mechanical motion convertor for generating a pivotal head disengaging motion from the linear actuator.

# FIG. 1

# F I G. 2

EP 0 473 413 A2

# FIG. 3

EP 0 473 413 A2

F I G. 4